# EUROPÄISCHE PATENTSCHRIFT

(11) **EP 1 424 528 B1**
(45) Veröffentlichungstag und Bekanntmachung des Hinweises auf die Patenterteilung: **28.12.2011**
(21) Anmeldenummer: 03017436.1
(22) Anmeldetag: 01.08.2003
(51) Int. Cl.: F24H 3/06, F24H 1/26, F16J 15/06

(54) **Wärmetauscher für ein Heizgerät**
Heat exchanger for a heater
Echangeur de chaleur pour chaudière

(30) Priorität: 28.11.2002 DE 10255464
(43) Veröffentlichungstag der Anmeldung: 02.06.2004
(73) Patentinhaber: ROBERT BOSCH GMBH, 70442 Stuttgart (DE)
(72) Erfinder: Kehl, Albin, 73098 Rechberghausen (DE); Schoenleber, Karl-Heinz, 72636 Frickenhausen (DE); Schmuker, Franz, 73117 Wangen (DE); Schaefer, Albrecht, 70771 Leinfelden-Echterdingen (DE); Klosok, Jan, 71336 Waiblingen (DE); Kimpel, Michael, 73730 Esslingen (DE); Weber, Guenter, 73274 Notzingen (DE)

(56) Entgegenhaltungen:
- DE-A- 3 400 048
- DE-A- 10 042 750
- US-A- 4 169 431

## Beschreibung

Die Erfindung betrifft einen Wärmetauscher für ein Heizgerät nach dem Oberbegriff des Anspruchs 1. Ein solcher Wärmetauscher ist aus Dokument US-A-4 169 431 schon bekannt.

### Stand der Technik

Ein Wärmetauscher dieser Art ist aus der FR 695 311 bekannt. Dabei ist ein zylindrischer Grundkörper, der gießtechnisch hergestellt ist, im Inneren mit einem Heizgaszug und an der Außenwand mit einem spiralförmigen Wasserkanal für das zu erwärmende Heizwasser ausgeführt. Der Wasserkanal ist dabei durch einen in die Mantelfläche der Außenwand spiralförmigen eingeformten Graben gebildet, der nach außen hin mit einer die Außenwand umschießenden separaten Umhüllung umgeben ist, so dass sich der geschlossene spiralförmige Wasserkanal an der äußeren Mantelfläche des Grundkörpers ergibt. Am oberen und unteren Endabschnitt ist der Grundkörper mit der Umhüllung mittels eines nicht näher bezeichneten Befestigungsmittels verbunden.

Aufgrund der zweiteiligen Ausführung des Wärmetauschers ist eine Abdichtung zwischen dem Grundkörper und der Umhüllung zumindest am oberen und unteren Endabschnitt notwendig. Derartige Abdichtungen werden üblicherweise mit Elastomere-Dichtungen, O-Ringen, Quad-Ringen oder speziell geformten Lippendichtungen hergestellt, wobei die Dichtungen in einer Nut des Grundkörpers liegen und die Pressung der Dichtung durch das Aufschieben der Umhüllung herstellbar ist. Ein Nachteil dieser Art der Abdichtung ist die translatorische Beanspruchung der Dichtung während des Fügevorgangs, wobei die Dichtung während einer langen Bewegungsstrecke der Umhüllung bereits bei ansteigender Pressung im Eingriff ist. Dadurch kann die Dichtung aufgrund von Abrieb beschädigt werden oder ganz oder teilweise in den Spalt zwischen Grundkörper und Umhüllung hineingezogen und an der Kante beschädigt werden. Bei einer derartigen Ausführung der Dichtung zwischen Grundkörper und Umhüllung ist aufgrund einer möglichen Vorschädigung der Dichtung eine Ausfallrate des Wärmetauschers nicht auszuschließen.

Aus der US 4 169 431 A geht ein Wärmetauscher für ein Heizgerät hervor, bei dem auf einen Grundkörper eine Umhüllung aufgebracht ist, die zur Ausbildung eines Wassermantels des Wärmetauschers dient. Die äußere Umhüllung weist an den Enden und umlaufende Abschnitte auf, die auf jeweils einen Rand des Grundkörpers aufpressbar sind. Zusätzlich ist an diesen Stellen eine Dichtung eingebracht, um eine dichte Verbindung zwischen Grundkörper und Umhüllung zu realisieren.

Weiterhin beschreibt die DE 34 00 048 A einen Wärmeübertrager, der aus zwei Teilen zusammengesetzt ist, und zwar aus einem Innenmantel und einem Außenmantel, wobei zwischen dem Innenmantel und dem Außenmantel ein Ringraum zur Durchströmung des Wärmeträgermediums ausgebildet ist. Die beiden Teile, Innenmantel und Außenmantel, sind in einer offenen Seite jeweils mit einem Flansch ausgeführt, der mittels einer Spritzmasse umspritzt ist.

Aufgabe der vorliegenden Erfindung ist es, eine Wärmetauscher mit einem Grundkörper und einer Umhüllung der Außenwand zu schaffen, der eine einfache und sichere Dichtung zwischen Grundkörper und Umhüllung aufweist sowie eine Beschädigung der Dichtung beim Aufziehen der Umhüllung ausgeschlossen wird.

### Vorteile der Erfindung

Der erfindungsgemäße Wärmetauscher mit den kennzeichnenden Merkmalen des Anspruchs 1 hat den Vorteil, dass eine einfache und sichere Dichtung zwischen Grundkörper und Umhüllung realisiert sowie eine Beschädigung der Dichtung während des Fügevorganges von Grundkörper und Umhüllung vermieden wird. Mit der Realisierung der Dichtung ist zugleich einen axiale Arretierung der Umhüllung am Grundkörper möglich.

Zusätzlich zur Herstellung der Dichtwirkung wird eine zusätzliche formschlüssige Fixierung der Umhüllung am Grundkörper realisiert. Dadurch wird zusätzlich eine sichere axiale Arretierung der Umhüllung am Grundkörper erzeugt. Die axiale Arretierung ist besonders zweckmäßig zu realisieren, wenn diese formschlüssige Fixierung zusammen mit der Verformung erfolgt, die die Presskraft auf das Dichtelement bewirkt. Dabei ist die Ausbildung einer zur Nut zusätzlichen Arretierfläche besonders geeignet. Es ist aber auch möglich, durch einen zusätzlichen Umformvorgang eine zusätzliche formschlüssige Fixierung der Umhüllung am Grundkörper zu erzeugen. Eine konische Ausbildung des Grundkörpers und der Umhüllung ermöglichen eine Vereinfachung des Fügevorganges von Grundkörper und Umhüllung. Die Nuten können dabei am brennerseitigen Endabschnitt und am abgasseitigen Endabschnitt radial in die Mantelfläche der Außenwand des Grundkörpers und/oder axial in die Stirnfläche des Grundkörpers eingebracht sein.

Ausführungsbeispiele der Erfindung sind in der Zeichnung dargestellt und in der nachfolgenden Beschreibung näher erläutert.

Es zeigen:
- Figur 1: eine Schnittdarstellung durch einen Wärmetauscher,
- Figur 2: eine vergrößerte Schnittdarstellung einer Dichtung gemäß einem ersten Ausführungsbeispiel,
- Figur 3: eine vergrößerte Schnittdarstellung einer Dichtung gemäß einem zweiten Ausführungsbeispiel,
- Figur 4: eine vergrößerte Schnittdarstellung durch eine Dichtung gemäß einem dritten Ausführungsbeispiel,
- Figur 5: eine vergrößerte Schnittdarstellung durch eine Dichtung gemäß einem vierten Ausführungsbeispiel,
- Figur 6: eine vergrößerte Schnittdarstellung durch eine am brennerseitigen und abgasseitigen Endabschnitt des Grundkörpers ausbildete Dichtung gemäß einem fünften Ausführungsbeispiel und
- Figur 7: eine vergrößerte Schnittdarstellung durch eine am brennerseitigen und abgasseitigen Endabschnitt des Grundkörpers ausgebildete Dichtung gemäß einem sechsten Ausführungsbeispiel.

### Ausführungsbeispiele

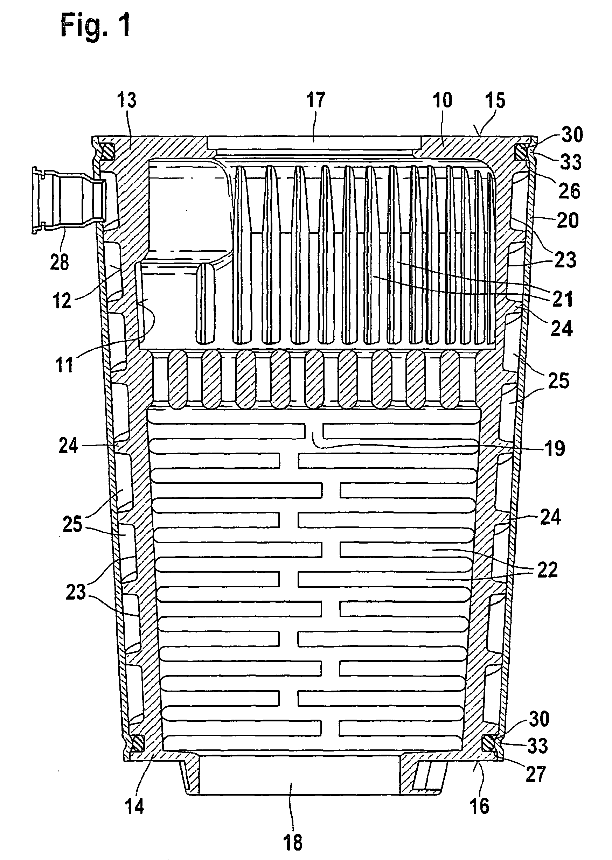

Figur 1 zeigt einen Wärmetauscher für ein Heizgerät mit einem Grundkörper 10 mit einer Innenwand 11 und einer Außenwand 12 sowie mit einem brennerseitigen Endabschnitt 13 und einem abgasseitigen Endabschnitt 14, wobei am brennerseitigen Endabschnitt 13 eine brennerseitige Stirnfläche 15 und am abgasseitigen Endabschnitt 14 eine abgasseitige Stirnfläche 16 ausgebildet sind. In der brennerseitigen Stirnfläche 15 befindet sich eine Öffnung 17, in die ein nicht dargestellter Brenner eingesetzt wird. In der abgasseitigen Stirnfläche 16 ist eine Abgasöffnung 18 vorhanden, über die das vom Brenner erzeugte Heizgas als Abgas abgeleitet wird.

Der Grundkörper 10 ist beispielsweise ein Aluminium-Sandguss-Bauteil, das sich aufgrund seiner Korrosionsbeständigkeit sowie Wärmeaufnahme und Wärmeleitfähigkeit besonders als Material für Heizgeräte eignet, die im kondensierenden Betrieb betrieben werden. Der Grundkörper 10 ist mit einem kreisförmigen Querschnitt ausgeführt und verläuft beispielsweise von der brennerseitigen Stirnfläche 15 zur abgasseitigen Stirnfläche 16 hin mit abnehmendem Durchmesser leicht konisch. Es ist aber genauso möglich, den Grundkörper 10 zylindrisch oder mit einem ovalen Querschnitt auszuführen. Im Inneren des Grundkörpers 10 befindet sich ein Heizgaszug 19, durch den das vom Brenner erzeugten Heizgases strömt. Innerhalb des Heizgaszuges 19 weist die Innenwand 11 verschiedene Längsrippen 21 und Querrippen 22 zur Vergrößerung der Wärmetauscherfläche auf.

An der Außenwand 12 des Grundkörpers 10 verläuft spiralförmig eine grabenförmig Vertiefung 23 mit einer umlaufenden Wand 24, wobei die Vertiefung 23 am Grundkörper 10 nach außen hin offen ist. Die Mantelfläche der Außenwand 12 des Grundkörpers 10 ist mit einer Umhüllung 20 umgeben, die beispielsweise aus Stahl ausgeführt ist. Die Umhüllung 20 ist ein separates Bauteil, das die grabenförmige Vertiefung 23 nach außen hin abschließt, so dass ein spiralförmig verlaufender, geschlossener Wasserkanal 25 für das zu erwärmende Heizwasser entsteht. Zur Herstellung des Wärmetauschers wird die Umhüllung 20 von dem abgasseitigen Endabschnitt 14 aus auf den Grundkörper 10 aufgeschoben bis die Umhüllung 20 an der äußeren Mantelfläche des Grundkörpers 10 anliegt.

Zum Anschluss eines Heizwasservorlaufes ist in der Umhüllung 20 am brennerseitigen Endabschnitt 13 des Grundkörpers 10 ein Anschlussstutzen 28 angeordnet. Ein nicht dargestellter weiterer Anschlussstutzen für den Heizwasserrücklauf ist beispielsweise in die abgasseitige Stirnfläche 16 des Grundkörpers 10 eingebracht.

Am brennerseitigen Endabschnitt 13 befindet sich im Grundkörper eine radial umlaufende, brennerseitige Nut 26 und am abgasseitigen Endabschnitt 14 eine radial umlaufende, abgasseitige Nut 27. In den Nuten 26, 27 befindet sich jeweils ein Dichtelement 30. Als Dichtelement 30 eignet sich ein Dichtring, beispielsweise ein O-Ring, oder eine speziell geformte Lippendichtung.

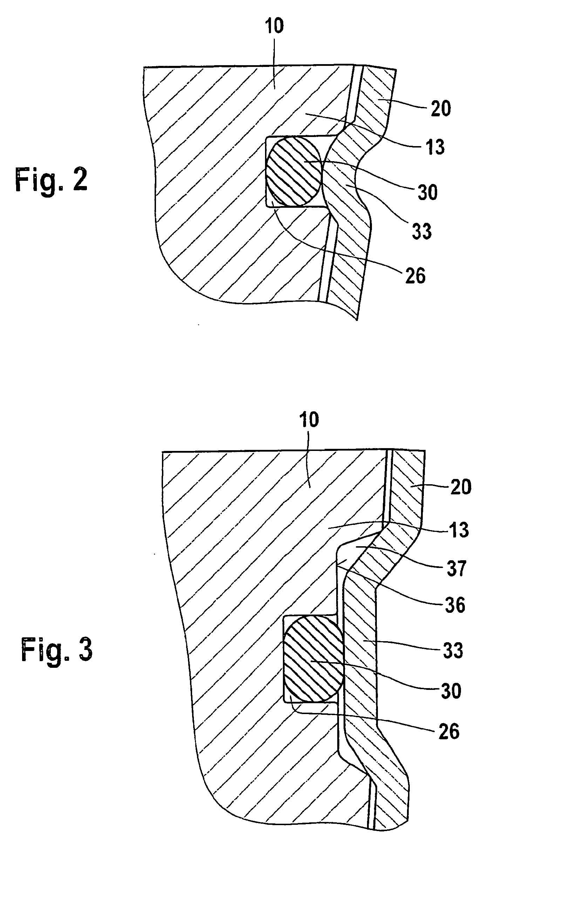

Gemäß einem ersten Ausführungsbeispiel in Figur 2 ist die Tiefe der Nut 26 so gewählt, dass der in die Nut 26 eingelegte Dichtring 30 unterhalb der von der Außenwand 12 des Grundkörpers 10 gebildeten äußeren Mantelfläche liegt. Dies wird dadurch erreicht, indem die Tiefe der Nut 26 größer als der Durchmesser bzw. die Stärke des Dichtrings 30 gewählt wird. Dadurch wird gewährleistet, dass beim Aufschieben der Umhüllung 20 auf den Grundkörper 10 die Umhüllung 20 nicht auf dem Dichtring 30 gleitet.

Zur Herstellung einer Dichtwirkung zwischen der Umhüllung 20 und dem Grundkörper 10 am brennraumseitigen Endabschnitt 13 und am abgasseitigen Endabschnitt 14 ist im Bereich der Nuten 26, 27 in die Umhüllung 20 jeweils eine umlaufende, plastische Verformung 33 in Form einer Sicke eingebracht. Die umlaufenden Verformungen 33 werden dabei zweckmäßigerweise durch Rollieren erzeugt, wobei die Tiefe der Verformungen 33 derart gestaltet sein muss, dass die Verformung 33 eine Presskraft auf den jeweiligen Dichtring 30 ausübt. Dadurch werden die Dichtringe 30 in den Nuten 26, 27 elastisch verformt und erzeugen dadurch die erforderliche Dichtwirkung zwischen Grundkörper 10 und Umhüllung 20, die notwendig ist, um den Wasserkanal 25 nach außen hin abzudichten.

Der sich aufgrund der Spielbehaftung zwischen Grundkörper 10 und Umhüllung 20 im Bereich der Wand 24 ergebende Spalt wirkt sich nicht negativ auf den Strömungskreislauf innerhalb des Wasserkanals 25 aus.

Ein zweites Ausführungsbeispiel zur Ausbildung einer Dichtung zwischen Grundkörper 10 und Umhüllung 20 geht aus Figur 3 hervor. Hierbei ist die Nut 26 zusätzlich in eine Grundfläche 36 einer Vertiefung 37 eingebracht. Hierbei ist darauf zu achten, dass der Dichtring 30 über die Ebene der Grundfläche 36 hinaus steht, so dass bei der Herstellung der Verformung 33 diese auf den Dichtring 30 eine Presskraft zur elastischen Verformung desselben ausüben kann. Bei diesem Ausführungsbeispiel darf die Tiefe der Nuten 26, 27 nicht größer sein als der Durchmesser des Dichtringes 30. Um ein Gleiten der Umhüllung 20 auf dem Dichtring 30 bei der Montage zu vermeiden, erfordert dieses Ausführungsbeispiel jedoch, dass die Tiefe der Vertiefung 37 größer ist als der über die Grundfläche 36 überstehende Abschnitt des Dichtringes 30.

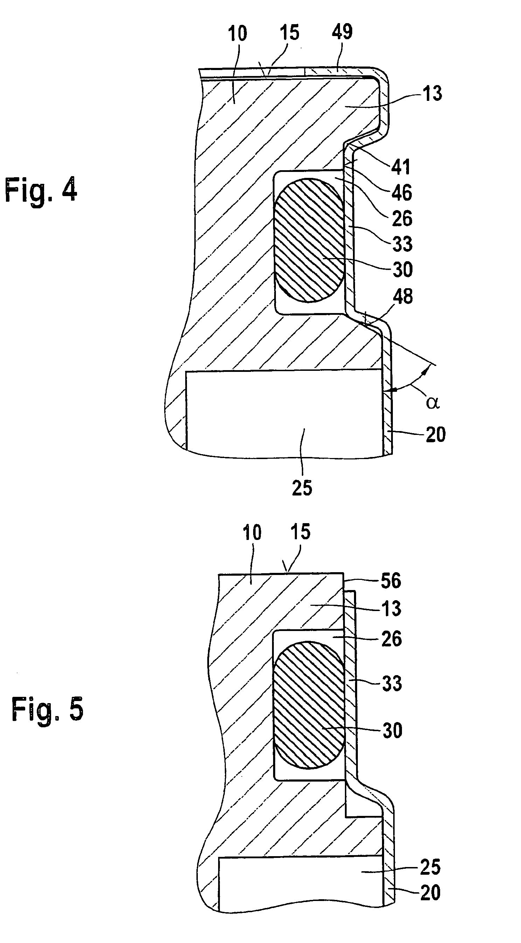

Eine dritte Ausführungsform zur Realisierung einer Dichtung zwischen Grundkörper 10 und Umhüllung 20 zeigt Figur 4. Hierbei ist die Nut 26 ähnlich dem Ausführungsbeispiel in Figur 3 in eine Vertiefung 41 mit einer Grundfläche 46 eingebracht. Die Vertiefung 41 weist dabei an der der brennerseitigen Stirnfläche 13 abgekehrten Seite eine in die Nut 26 verlaufende Schräge 48 mit einem Neigungswinkel α von beispielsweise 65° auf. Die Schräge 48 wirkt als Umformkante und es entsteht dabei gleichzeitig eine Fixierung der Umhüllung 20 am Grundkörper 10 in axialer Richtung. Beim Ausführungsbeispiel gemäß Figur 4 ist die Umhüllung 20 an der brennerseitigen Stirnfläche 15 zusätzlich mit einer Umbördelung 49 versehen, die eine zusätzliche axiale Fixierung der Umhüllung 20 am Grundkörper 10 realisiert.

In Figur 5 ist eine weitere Ausführungsform einer Dichtung am brennerseitigen Endabschnitt 13 des Grundkörpers 10 dargestellt. Dabei ist die radiale Nut 26 in einem von der äußeren Mantelfläche des Grundkörpers 10 zurückversetzten Abschnitt 56 radial eingebracht. Der zurückversetzte Abschnitt 56 läuft dabei an der brennerseitigen Stirnfläche 15 aus. Die Tiefe der Nut 26 ist dabei so gewählt, dass der Dichtring 30 über die radiale Fläche des zurückversetzten Abschnitts 56 übersteht. Nach dem Aufschieben der Umhüllung 20 auf den Grundkörper 10 wird die Umhüllung 20 im Bereich des zurückversetzten Abschnittes 56 verformt, so dass die Verformung 33 entsteht. Die Verformung 33 übt dabei eine Presskraft auf den Dichtring 30 aus, die diesen elastisch verformt und dadurch die Dichtwirkung realisiert.

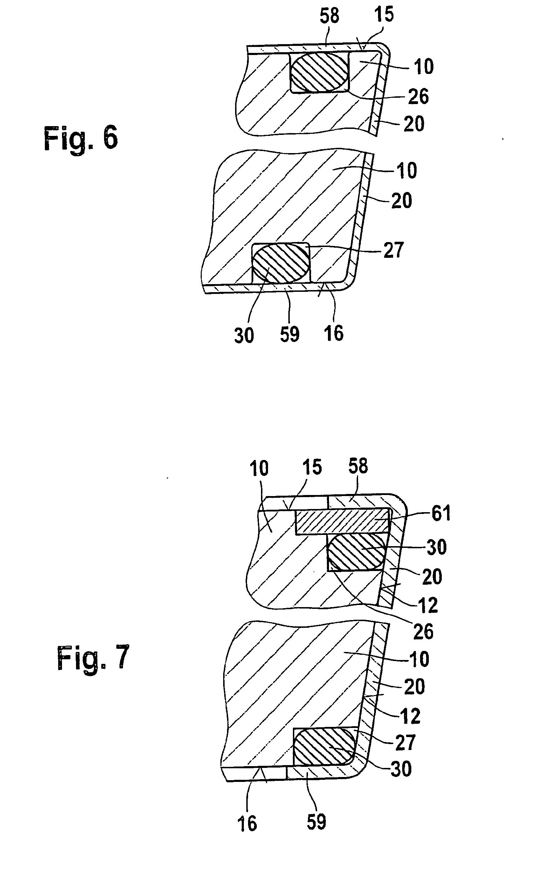

Zwei Ausführungsbeispiele einer Dichtung der Umhüllung 20 am Grundkörper 10 des Wärmetauschers, bei denen die Dichtung an den axialen Stirnflächen des Grundkörpers 10 realisiert sind, gehen aus den Figuren 6 und 7 hervor. In Figur 6 ist die brennerseitige Nut 26 in die brennerseitige Stirnfläche 15 und die abgasseitige Nut 27 in die abgasseitige Stirnfläche 16 eingearbeitet. Hierbei ist die Tiefe der Nuten 26, 27 und der Durchmesser des Dichtrings 30 so zu wählen, dass der Dichtring 30 über die jeweilige Stirnfläche 15, 16 übersteht. Die axiale Ausdehnung der Umhüllung 20 ist dabei so gewählt, dass die Umhüllung 20 mit einem brennerseitigen Abschnitt 58 und einem abgasseitigen Abschnitt 59 über die jeweilige Stirnfläche 15, 16 übersteht. Durch ein Umbördeln des brennerseitigen Abschnitts 58 und des abgasseitigen Abschnitts 59 wird das Material der Umhüllung 20 auf die brennerseitige Stirnfläche 15 bzw. die abgasseitige Stirnfläche 16 gepresst. Dadurch wirkt eine Presskraft auf den Dichtring 30, so dass die notwendige Dichtwirkung zwischen Grundkörper 10 und Umhüllung 20 entsteht.

Bei der Ausführungsform gemäß Figur 7 sind die Nuten 26, 27 in die Kanten zwischen der Außenwand 12 und den Stirnflächen 15, 16 eingearbeitet. Um eine Beschädigung der Dichtringe 30 beim Aufschieben der Umhüllung 20 zu vermeiden, ist bei der Dimensionierung der Nuten 26, 27 darauf zu achten, dass die radiale Tiefe der Nuten 26, 27 so bemessen ist, dass der Dichtring 30 im Ruhezustand nicht über die Mantelfläche der Außenwand 12 übersteht. Zur Erzielung der Dichtwirkung ist es jedoch notwendig, dass die axiale Tiefe der Nuten 26, 27 so bemessen ist, dass durch die Umbördelung des brennerseitigen Abschnitts 58 und des abgasseitigen Abschnitts 59 eine Presskraft auf die Dichtringe 30 einwirken kann. Zur Erzeugung einer Umformkante zum Umbördeln des brennerseitigen Abschnitts 58 und/oder des abgasseitigen Abschnitts 59 ist im vorliegenden Ausführungsbeispiel gemäß Figur 7 zwischen brennerseitigem Abschnitt 58 und Dichtring 30 zusätzlich ein Stützring 61 zwischengelegt. Dadurch wird gewährleistet, dass beim Umbördeln des brennerseitigen Abschnitts 58 dieser über die Kante des Stützrings 61 auf die Stirnfläche gepresst wird und der Stützring 61 die Presskraft auf den Dichtring 30 überträgt.

Die beschriebenen Ausführungsbeispiele zur Herstellung verschiedener Dichtungen zwischen Grundkörper 10 und Umhüllung 20 sind untereinander auch kombinierbar, so dass unterschiedliche Ausführungsformen am brennerseitigen Endabschnitt 13 und am abgasseitigen Endabschnitt 14 des Wärmetauschers realisiert werden können.

Es ist auch denkbar, dass die in den Figuren 2, 3 und 5 dargestellten radialen Verformungen 33 eine zusätzliche Umbördelung zumindest an der brennerseitigen Stirnfläche 15 gemäß Figur 4 aufweisen können.

### Bezugszeichen

- 10: Grundkörper
- 11: Innenwand
- 12: Außenwand
- 13: brennerseitiger Endabschnitt
- 14: abgasseitiger Endabschnitt
- 15: brennerseitige Stirnfläche
- 16: abgasseitige Stirnfläche
- 17: Öffnung
- 18: Abgasöffnung
- 19: Heizgaszug
- 20: Umhüllung
- 21: Längsrippen
- 22: Querrippen
- 23: grabenförmige Vertiefung
- 24: Wand
- 25: Wasserkanal
- 26: brennerseitige Nut
- 27: abgasseitige Nut
- 28: Anschlussstutzen
- 30: Dichtring
- 33: Verformung
- 36: Grundfläche
- 37: Vertiefung
- 41: Vertiefung
- 46: Grundfläche
- 48: Schräge
- 49: Umbördelung
- 56: zurückversetzter Abschnitt
- 58: brennerseitiger Abschnitt
- 59: abgasseitiger Abschnitt
- 61: Stützring

## Patentansprüche

1. Wärmetauscher für ein Heizgerät mit einem Grundkörper (10) mit einer an der Außenwand ausgebildeten grabenförmigen Vertiefung (23), wobei die grabenförmige Vertiefung (23) am Grundkörper (10) zur Außenseite hin offen ist und der Grundkörper (10) zumindest im Bereich der grabenförmigen Vertiefung (23) von einer separaten Umhüllung (20) umschlossen ist, so dass sich an der Außenwand des Grundkörpers (10) ein Flüssigkeitskanal für die zu erwärmende Flüssigkeit ausbildet, und wobei zwischen Grundkörper (10) und Umhüllung (20) zumindest an einem brennerseitigen und einem abgasseitigen Endabschnitt (13, 14) eine Dichtung (30) ausgebildet ist, **dadurch gekennzeichnet, dass** die Dichtung (30) innerhalb einer Nut (27, 28) angeordnet ist, dass die Umhüllung (20) im Bereich der Dichtung (30) eine Verformung (33, 57, 58) aufweist, die mittels einer Presskraft auf die Dichtung (30) einwirkt, und dass eine zur Nut (27, 28) zusätzliche Arretierfläche zur zusätzlichen formschlüssigen Fixierung der Umhüllung am Grundkörper vorgesehen ist, wodurch eine axiale Arretierung der Umhüllung am Grundkörper gegeben ist.

2. Wärmetauscher nach Anspruch 1, **dadurch gekennzeichnet, dass** die Nut (26, 27) eine Tiefe aufweist, so dass die Dichtung (30) in der Nut (26, 27) radial versenkt ist, und dass die Verformung (33) zumindest teilweise in die Nut (26, 27) eingreift.

3. Wärmetauscher nach Anspruch 1, **dadurch gekennzeichnet, dass** die Nut (26, 27) in einer Vertiefung (37) radial zurückgesetzt angeordnet ist.

4. Wärmetauscher nach Anspruch 3, **dadurch gekennzeichnet, dass** die Vertiefung (37) mindestens eine Arretierfläche (48) aufweist, an der die Verformung (33) der Umhüllung (20) radial untergreift, so dass die Umhüllung (20) am Grundkörper (10) eine axiale Fixierung erfährt.

5. Wärmetauscher nach Anspruch 1, **dadurch gekennzeichnet, dass** mindestens eine Nut (26, 27) am brennerseitigen Endabschnitt (13) und/oder am abgasseitigen Endabschnitt (14) des Grundkörpers (10) radial eingebracht ist.

6. Wärmetauscher nach Anspruch 1, **dadurch gekennzeichnet, dass** mindestens eine Nut (26, 27) am brennerseitigen Endabschnitt (13) und/oder abgasseitigen Endabschnitt (14) des Grundkörpers (10) in die jeweilige Stirnseite (15, 16) axial eingebracht ist.

7. Wärmetauscher nach Anspruch 1, **dadurch gekennzeichnet, dass** die Verformung (33) eine in die Umhüllung (20) eingebrachte Sicke ist.

8. Wärmetauscher nach Anspruch 1, **dadurch gekennzeichnet, dass** die Umhüllung (20) eine zusätzliche Umformung zur axialen Fixierung der Umhüllung (20) am Grundkörper (10) aufweist.

9. Wärmetauscher nach einem der vorhergehenden Ansprüche, **dadurch gekennzeichnet, dass** der Grundkörper (10) und die Umhüllung (20) konisch ausgeführt sind.

## Claims

1. A heat exchanger for a heater comprising a base body (10) having a channel-like recess (23) formed in the outer wall, wherein the channel-like recess (23) on the base body (10) is open towards the outer side and the base body (10) is surrounded at least in the area of the channel-like recess (23) by a separate casing (20), so that a liquid channel for the liquid to be heated is formed on the outer wall of the base body (10) and wherein between base body (10) and casing (20), at least one seal (30) is formed on a burner-side and an exhaust gas-side end section (13, 14), **characterised in that** the seal (30) is disposed inside a groove (27, 28), that the casing (20) has a deformation (33, 57, 58) in the area of the seal (30), which acts by means of a pressure force on the seal (30), and that a locking surface additional to the groove (27, 28) is provided for additional positive fixing of the casing on the base body, whereby an axial locking of the casing on the base body is given.

2. The heat exchanger according to claim 1, **characterised in that** the groove (26, 27) has a depth so that the seal (30) is recessed radially in the groove (26, 27) and that the deformation (33) engages at least partially in the groove (26, 27).

3. The heat exchanger according to claim 1, **characterised in that** the groove (26, 27) is disposed in a radially set-back manner in a recess (37).

4. The heat exchanger according to claim 3, **characterised in that** the recess (37) has at least one locking surface (48) at which the deformation (33) of the casing (20) reaches under radially so that the casing (20) experiences an axial fixing on the base body (10).

5. The heat exchanger according to claim 1, **characterised in that** at least one groove (26, 27) is incorporated radially on the burner-side end section (13) and/or on the exhaust gas side end section (14) of the base body (10).

6. The heat exchanger according to claim 1, **characterised in that** at least one groove (26, 27) is incorporated axially on the burner-side end section (13) and/or on the exhaust gas side end section (14) of the base body (10) in the respective face (15, 16).

7. The heat exchanger according to claim 1, **characterised in that** the deformation (33) is a beading introduced into the casing (20).

8. The heat exchanger according to claim 1, **characterised in that** the casing (20) has an additional deformation for axial fixing of the casing (20) on the base body (10).

9. The heat exchanger according to any one of the preceding claims, **characterised in that** the base body (10) and the casing (20) are designed conically.

## Revendications

1. Echangeur de chaleur pour un appareil de chauffage comprenant un corps de base (10) avec une cavité (23) en forme de fosse, conçue sur la paroi extérieure, la cavité (23) en forme de fosse étant ouverte sur le corps de base (10) en direction du côté extérieur et le corps de base (10) étant entouré au moins dans la zone de la cavité (23) en forme de fosse par une enveloppe (20) séparée, de sorte qu'un canal de liquide pour le liquide à réchauffer se forme sur la paroi extérieure du corps de base (10), et un joint (30) étant réalisé entre le corps de base (10) et l'enveloppe (20) au moins sur un tronçon d'extrémité (13, 14) côté brûleur et côté gaz d'échappement, **caractérisé en ce que** le joint (30) est disposé à l'intérieur d'une rainure (27, 28), **en ce que** l'enveloppe (20) présente dans la zone du joint (30) une partie formée (33, 57, 58), qui agit au moyen d'une force de compression sur le joint (30), et **en ce qu'**une surface d'arrêt supplémentaire de la rainure (27, 28) est prévue pour la fixation supplémentaire par complémentarité de formes de l'enveloppe sur le corps de base, de sorte qu'on a un arrêt axial de l'enveloppe sur le corps de base.

2. Echangeur de chaleur selon la revendication 1, **caractérisé en ce que** la rainure (26, 27) présente une profondeur, de sorte que le joint (30) est noyé radialement dans la rainure (26, 27), et **en ce que** la partie formée (33) s'engage au moins partiellement dans la rainure (26, 27).

3. Echangeur de chaleur selon la revendication 1, **caractérisé en ce que** la rainure (26, 27) est disposée radialement en retrait dans une cavité (37).

4. Echangeur de chaleur selon la revendication 3, **caractérisé en ce que** la cavité (37) présente une surface d'arrêt (48), sur laquelle la partie formée (33) de l'enveloppe (20) passe au-dessous radialement, de sorte que l'enveloppe (20) présente une fixation axiale sur le corps de base (10).

5. Echangeur de chaleur selon la revendication 1, **caractérisé en ce qu'**au moins une rainure (26, 27) est introduite radialement sur le tronçon d'extrémité (13) côté brûleur et/ou sur le tronçon d'extrémité (14) côté gaz brûlés du corps de base (10).

6. Echangeur de chaleur selon la revendication 1, **caractérisé en ce qu'**au moins une rainure (26, 27) est introduite axialement dans le côté avant (15, 16) respectif sur le tronçon d'extrémité (13) côté brûleur et/ou sur le tronçon d'extrémité (14) côté gaz brûlés du corps de base (10).

7. Echangeur de chaleur selon la revendication 1, **caractérisé en ce que** la partie formée (33) est une moulure introduite dans l'enveloppe (20).

8. Echangeur de chaleur selon la revendication 1, **caractérisé en ce que** l'enveloppe (20) présente une partie formée supplémentaire pour la fixation axiale de l'enveloppe (20) sur le corps de base (10).

9. Echangeur de chaleur selon l'une des revendications précédentes, **caractérisé en ce que** le corps de base (10) et l'enveloppe (20) sont réalisés de façon conique.
